# EUROPÄISCHE PATENTSCHRIFT

(11) **EP 1 423 027 B1**
(45) Veröffentlichungstag und Bekanntmachung des Hinweises auf die Patenterteilung: **16.09.2009**
(21) Anmeldenummer: 02764848.4
(22) Anmeldetag: 14.08.2002
(51) Int. Cl.: A46B 3/04, A46D 3/00, B29C 45/14

(54) **VERFAHREN ZUM BEBORSTEN EINES BÜRSTENTRÄGERS EINER ZAHNBÜRSTE MIT AUS EINZELNEN BORSTEN ZUSAMMENGESETZTEN BÜSCHELN**
METHOD FOR PROVIDING A BRUSH CARRIER OF A TOOTHBRUSH WITH TUFTS OF INDIVIDUAL BRISTLES
PROCEDE POUR GARNIR UNE MONTURE DE BROSSE A DENTS DE TOUFFES COMPOSEES DE SOIES INDIVIDUELLES

(30) Priorität: 06.09.2001 DE 10143673
(43) Veröffentlichungstag der Anmeldung: 02.06.2004
(73) Patentinhaber: Braun GmbH, 61476 Kronberg (DE)
(72) Erfinder: STEIN, Bernd, 61389 Schmitten (DE); MCCONNELL, Mark, Oola, County Limerick (IE); DEPUYDT, Joseph, Quincy, MA 02169 (US); VANKOV, Michael, 61389 Schmitten (DE); CEM FIRATLI, Ahmet, 65207 Wiesbaden (DE)
(86) Internationale Anmeldenummer: PCT/EP2002/009085
(87) Internationale Veröffentlichungsnummer: WO 2003/022097

(56) Entgegenhaltungen:
- WO-A-00/60980
- US-A- 5 242 235
- US-A- 5 836 036

## Beschreibung

Die vorliegende Erfindung betrifft ein Verfahren zum Herstellen von Funktionselementen einer Zahnbürste gemäß Patentanspruch 1 sowie nach dem Verfahren hergestellte Funktionselemente gemäß Patentanspruch 9.

Aus dem Stand der Technik sind bereits Verfahren zum Herstellen von Zahnbürsten aus Kunststoff bekannt. So beschreibt beispielsweise die DE-OS 3403341 ein Verbindungsverfahren, bei dem ein Borstenträger an der Borstenaufnahmeseite und ggf. die Borsten an ihrem Befestigungsende durch Aufschmelzen in weichplastischen Zustand versetzt und anschließend unter Andruck zusammengeführt werden. Hierbei ist es ausreichend, den Borstenträger nur bereichsweise an den Stellen aufzuschmelzen, an denen einzelne Borstenbündel befestigt werden. Beim Aufschmelzen der Borstenenden eines Borstenbündels fließt der thermoplastische Kunststoff zu einer Verdickung zusammen, die zugleich die Grundlage für die Verbindung der Borsten untereinander bildet. Je nach Art der Werkstoffpaarung von Borsten und Borstenträger entsteht eine Schweißverbindung, also eine stoffschlüssige Verbindung beider Werkstoffe, oder eine Fügeverbindung, bei der die Borsten mit ihrem verdickten Ende von dem weichplastischen Kunststoff des Borstenträgers umschlossen sind und auf diese Weise gehalten werden.

Aus der DE-OS 2812746 ist bekannt, einen Borstenendlosstrang an die Vorrichtung heranzuführen, von dem Strang die Borstenbündel in der gewünschten Länge abzuschneiden und nach gleichzeitigem Erwärmen der Borstenträger-Aufnahmeseite und der Borstenenden, diese zusammenzuführen und in der zusammengeführten Lage zu fixieren, bis nach ausreichender Abkühlung eine feste Verbindung hergestellt ist. Bei diesem Verfahren erfolgt das Zuführen, Abschneiden, Aufschmelzen, Verbinden und Abkühlen an einer einzigen Arbeitsstation.

Ferner offenbart die DE 19932377 A1 ein Verfahren zum Herstellen von Bürsten mit einem Borstenträger aus Kunststoff und einem daran befestigten Borstenbesatz aus einzelnen oder zu Bündeln zusammengefaßten Kunststoffborsten. Dabei werden die befestigungsseitigen Enden der Borsten oder Bündel zu einer Verdickung aufgeschmolzen. Verdickungen benachbarter Borsten oder Bündel werden durch Nachformen und Verdrängen von Kunststoffmasse miteinander verbunden und die Verbindungen werden anschließend in das Kunststoffmaterial des Borstenträgers eingebettet. Hierbei werden die Verdickungen mittels eines Formwerkzeugs zu einer definierten Tragstruktur aus benachbarten Verdickungen zu verbindenden Stegen umgeformt und anschließend die Tragstruktur und diese überragenden Borsten auf einer kurzen Länge in das Kunststoffmaterial des Borstenträgers eingebettet.

Ähnlich arbeitet das in der DE 19542393 A1 offenbarte Verfahren zum Herstellen von Bürsten. Bei diesem Verfahren werden Borstenbündel in einer Anordnung entsprechend ihrer Borstenfeldlage gehalten und ihre Befestigungsenden in dieser Lage anschließend angeschmolzen und mittels dieser Schmelzung zu einer Borsten-Bündel-Einheit verbunden werden. Dabei wird beim Anschmelzen der Befestigungsenden aus dieser Schmelze auch das die Befestigungsenden verbindende Teil erzeugt.

Die EP 0326634 A1 offenbart ein Verfahren zum Herstellen von Borstenwaren, bei dem Borstenbündel aus Einzelborsten oder Borstensträngen durch Kanäle und diese verlängernde Hülsen in eine Form für den Borstenträger eingeführt werden. Diese Borstenbüschel werden dann an ihrem an der Form befindlichen Ende zur Bildung einer Verdickung thermisch aufgeschmolzen und die beim Aufschmelzen entstehende Verdickung an den Borstenenden zur dichtenden Anlage an die Mündungsöffnung der in die Form hinein ragenden Hülse gebracht. Die Borsten und die Hülse werden während des Ausfüllens der Form, beispielsweise durch Spritzgießen, in ihrer Position gehalten. Dieses Verfahren wird auch als "in mold" Verfahren bezeichnet.

Die WO 99/11156 offenbart ein Verfahren zum Herstellen von Borstenfeldern. Auch hier werden die Borsten im Bereich der Hinterschneidung derart erhitzt, daß eine die Hinterschneidung ganz oder teilweise ausfüllende Schmelze oder plastische Masse aus dem Kunststoff der Borsten entsteht und daß durch die danach erstarrende Masse aus Kunststoff der Borstenformschluß zwischen den Borsten oder Borstenbüscheln und den Hinterschneidungen und dadurch mit der Halteplatte gebildet wird. Damit können die Hinterschneidungen vor oder gleichzeitig mit dem Abschmelzen der zu verschmelzenden Enden der Kunststoffborsten gebildet werden.

Ferner schlägt DE 19937481 A1 ein Zweikomponenten-Spritzgußverfahren zum Herstellen einer Bürste, bestehend aus einem Borstenträger aus wenigstens zwei wesentlichen parallelen Schichten auf unterschiedlichen Kunststoffen, vor, bei dem die Borsten an wenigstens einer der Schichten befestigt werden. Dabei ist die den Borsten abgekehrte Schicht des Borstenträgers mit Durchbrechungen versehen, die umfangseitig geschlossen und mit dem Kunststoff der anderen Schicht gefüllt sind. Hierdurch kommt es zu einer formflüssigen Verbindung zwischen den beiden unterschiedlichen Kunststoffschichten.

Aus der Entgegenhaltung WO 00/60980 A (D1) ist ein Verfahren zum Herstellen von Funktionselementen bekannt, die jeweils an einem Ende mit einem Verankerungs- oder Halte- oder Achselement versehen sind, wobei die Funktionselemente durch eine gitterförmige Kanäle aufweisende Spritzgußform mit einem gitter- oder stabförmigen Kunststoffrahmen verbunden sind.

Die nach diesem Verfahren hergestellten Funktionselemente bleiben mit dem Kunststoffrahmen verbunden, werden dann als komplette Einheit von einem Polster aus elastomerem Material umspritzt und mit einem Zahnbürstenkörper verbunden. Eine Vereinzelung der durch dieses Verfahren hergestellten Funktionselemente ist nicht vorgesehen und- wenn überhaupt - auch nur schwerlich möglich und wirtschaftlich nicht zu vertreten.

Nachteilig ist es bei den zuvor genannten Veröffentlichungen, daß die Funktionselemente nach ihrer Herstellung zu ihrer weiteren Verarbeitung oft nur mit verhältnismäßig großem Aufwand vereinzelt und entsprechend ausgerichtet werden können, um sie anschließend in einem Bürstenträger in richtiger Stellung zu fixieren.

Aufgabe der vorliegenden ersten Erfindung ist es, ein verbessertes und vereinfachtes Verfahren zum Herstellen von Funktionselementen für die Verwendung in Zahnbürsten zur Verfügung zu stellen, mit dem die Funktionselemente einfacher und kostengünstiger herstellbar sind. Dieses Verfahren soll insbesondere die kostengünstige Herstellung und Integration von Funktionselementen bei der Zahnbürstenproduktion ermöglichen. Des weiteren sollen in einer zweiten Erfindung Funktionselemente gebildet werden, die nach dem oben beschriebenen Verfahren hergestellt wurden und die während ihrer weiteren Verarbeitung besser handhabbar sind.

Die erste Aufgabe wird gemäß der ersten Erfindung durch ein Verfahren zum Herstellen von Funktionselementen für den Einsatz in einer Zahnbürste nach den Merkmalen des Patentanspruchs 1 gelöst. Vorteilhafte Ausgestaltungen und Weiterbildungen der ersten Erfindung werden in den Unteransprüchen 2 bis 8 beschrieben. Durch die erfindungsgemäße Lösung wird ein vorteilhaftes Verfahren zur Verfügung gestellt, das die einfache und kostengünstige Herstellung von Funktionselementen für Zahnbürsten ermöglicht. Unter Funktionselementen nach den Erfindungen werden sowohl Borstenbüschel bzw. Tufts aus verschiedenen Filamenten als auch sonstige Elemente, die Sonderfunktion auf einer Zahnbürste einnehmen, verstanden.

Das erfindungsgemäß vorgeschlagene Verfahren ermöglicht die Anbringung auch von verschiedenen Funktionselementen auf einem Funktionselementträger, die dann aufgrund ihrer vorgegebenen Ausrichtung eine einfache Integration und sichere Verankerung in einem Bürstenkopf oder in einem Griffstück einer Zahnbürste ermöglichen. So werden mehrere Büschel in eine Spritzgußform oder den Teil einer Spritzgußform eingesetzt. Die Spritzgußform wird dabei auch als "mold bar" bezeichnet. Wichtig ist dabei, daß alle Elemente durch Kanäle miteinander verbunden sind, die auch als "hot runner" bezeichnet werden, um das flüssige thermoplastische Kunststoffmaterial an die jeweils vorgesehenen Stellen zu transportieren. Die Funktionselemente selbst können dabei vorzugsweise an den Gitterstäben, d.h., an den Längs- und Querstreben des Kunststoffrahmens, angeordnet sein.

Das Muster der gitterförmig angeordneten Kanäle kann mit seinen Abmessungen und Abständen den späteren Stellen entsprechen, an denen die Funktionselemente später in einem Bürstenprodukt sitzen. Dies ist aber nicht notwendig. Vielmehr kann sich die Anordnung an maschinelle Vorgaben, wie beispielsweise den entsprechenden Montageautomaten oder ähnliches, richten. Die Verbindungspunkte, an denen die Kanäle sich schneiden, werden im folgenden als Gitterpunkte bezeichnet.

Durch das erfindungsgemäße Verfahren werden in einem Arbeitsgang in einem Werkzeug viele Büschel mit Verankerungseinrichtungen versehen und gleichzeitig mit einem Kunststoffrahmen ausgebildet, so daß ein einfach zu handhabender Funktionselementträger mit ausgerichteten und sortierten Funktionselementen entsteht, mit dem viele Funktionselemente in einem Arbeitsgang in ein Werkzeug eingesetzt werden können.

Die gitter- oder stabförmigen Kunststoffrahmen werden entweder vor Einsetzen der Funktionselemente in ein Werkzeug oder nach Einsetzen im Werkzeug von den Funktionselementen getrennt, so daß nur noch die Funktionselemente im Zahnbürstenkopf verbleiben. Dabei können die einzelnen Funktionselemente mit Kunststoffmasse umspritzt werden und dann einen fertigen Zahnbürstenkopf bilden oder die einzelnen Funktionselemente können in einen bereits vorgespritzten Zahnbürstenkopf in vorgesehene Öffnungen eingesetzt werden, wo sie dann entweder Hinterschneidungen hintergreifen und so entweder drehbar, schwenkbar oder auch drehfest im Bürstenträger befestigt sind. Sie können aber auch durch besondere Verankerungsmittel, wie Drähte, Kleber, Keile oder auch durch Verstemmen etc., im Bürstenträger befestigt werden. Es ist aber auch möglich, beide Teile so zu erhitzen, daß ein inniges Verschmelzen erfolgt.

Um die Funktionselemente leicht vom Kunststoffrahmen lösen zu können, sind bei dem Herstellverfahren an den Enden der Verankerungs-, Halte- oder Achselemente der Funktionselemente Verjüngungen angeformt, die dann bei der weiteren Verarbeitung beispielsweise als Bruch-, Schnitt- oder Trennstelle dienen. Das Vereinzeln der Funktionselemente kann ebenfalls dadurch erfolgen, indem diese allesamt in Öffnungen eines Folgespritzwerkzeuges aufgenommen werden und in einem Arbeitsgang die Verjüngungen durchtrennt werden. Anschließend wird der abgetrennte Kunststoffrahmen aus dem Folgespritzwerkzeug entfernt und die Funktionselemente können in einen Bürstenträger eingesetzt oder gleich im Folgespritzwerkzeug zur Bildung eines Bürstenkopfes oder einer kompletten Zahnbürste umspritzt werden.

Die vorliegende erste Erfindung ermöglicht das gleichzeitige Herstellen von Funktionselementen von Bürstenprodukten mit integrierten Handhabungshilfen für die spätere Weiterverarbeitung sowie die Möglichkeit, gemäß Anspruch 2, besondere Montagehilfen oder Funktionsflächen an diese Funktionselemente anzuspritzen. Dies können beispielsweise nach Anspruch 3 Anker, Bewegungsachsen oder Ähnliches sein. Darüber hinaus können durch diesen Prozeß nach Anspruch 4 verschiedenste Materialkombinationen realisiert werden, beispielsweise Borstenbüschel aus extrudierten Nylonfilamenten mit umspritzten Ankern oder Achsen aus elastomerem Kunststoff, Massageelemente aus Weichmaterial etc..

Die Funktionselemente können nach den Merkmalen des Patentanspruchs 5 mit Hinterschneidungen versehen werden, die beispielsweise bei Borstenbüscheln oder Tufts durch Anschmelzen des hinteren Büschelelementes erzeugt werden. Im Falle von Massageelementen o.ä., die entweder aus thermoplastischem Kunststoff oder aus einem elastomeren Kunststoff oder gar einer Kombination aus mehreren unterschiedlichen Materialien hergestellt sind, können derartige Hinterschneidungen bereits vorab konstruktiv vorgesehen sein und in diesem Verfahrensschritt lediglich zur Weiterverarbeitung, beispielsweise durch Erwärmen, vorbereitet werden. An diese Hinterschneidungen kann dann ein Verankerungs-, Halte- oder Achsenelement mit flüssiger Kunststoffmasse angespritzt werden.

Gemäß den Merkmalen des Patentanspruchs 6 lassen sich die Funktionselemente besonders einfach im Bürstenträger integrieren. Dabei kann der gitterförmige Kunststoffrahmen auch wie ein windschiefes Parallelogramm ausgebildet sein oder sonst irgend eine beliebige Struktur annehmen, an dem die Funktionselemente befestigt sind. Dieser Freiheitsgrad macht deutlich, daß je nach gewünschter Anordnung und Lage der Funktionselemente auf dem Bürstenträger der Funktionselementträger zuvor so hergestellt wird, daß seine Funktionselemente bereits diese geometrische Endlage auf der Zahnbürste einnehmen.

Nach den Merkmalen des Patentanspruchs 7 wird ein Verfahren zur Verfügung gestellt, bei dem die Funktionselemente im Kunststoffrahmen nach ihrer Herstellung und kurz vor der Integration in einer Zahnbürste durch Verschieben der Längsstreben zueinander noch derart im Kunststoffrahmen in gewissen Grenzen umgelenkt werden, wie sie anschließend im Bürstenkopf angeordnet sein sollen. Dieses Verfahren hat den Vorteil, daß nicht mit einzelnen Funktionselementen, sondern mit einem die Funktionselemente tragenden Funktionselementträger hantiert wird, auf dem bereits alle für einen Bürstenkopf benötigten Funktionselemente angeordnet sind. Durch das Verschieben der Längsstreben gegeneinander können die Funktionselemente so eng beieinander zu liegen kommen, wie dies bei dem Hantieren einzelner Funktionselemente nicht möglich wäre, weil zum Halten und Führen dieser durch Greifeinrichtungen bestimmte Abstände zwischen den einzelnen Funktionselementen erforderlich wären.

Mit den Merkmalen des Patentanspruchs 8 können auf einem Funktionselementträger verschiedenartigste Funktionselemente aus verschiedenen oder auch gleichen Materialien angeordnet sein. So können beispielsweise Borstenbüschel mit verschiedenen Filamenten, Massageelemente oder sonstige verschiedene Sonderfunktionen einnehmenden Elemente ausgebildet sein.

Gemäß der zweiten Erfindung nach Anspruch 9 sind die Funktionselemente mit ihren in einem Bürstenkopf zu verankernden Enden an einem gitter- oder stabförmigen Kunststoffrahmen befestigt, so daß diese Einheit bei ihrer weiteren Verarbeitung leichter handhabbar ist. An den Gitterpunkten des Kunststoffrahmens sind Verjüngungen ausgebildet, die ein besseres Vereinzeln der Funktionselemente aus dem Kunststoffrahmen ermöglichen, d.h., die einzelnen Funktionselemente können leichter herausgebrochen, herausgeschnitten oder sonstwie aus dem Kunststoffrahmen entfernt werden. Die vorliegende zweite Erfindung ermöglicht integrierte Handhabungshilfen für die spätere Weiterverarbeitung sowie die Möglichkeit, besondere Montagehilfen oder Funktionsflächen an diese Funktionselemente anzuspritzen (Anker, Bewegungsachsen etc.). Darüber hinaus können mit diesen Funktionselementen verschiedenste Materialkombinationen realisiert werden.

Nach den Merkmalen des Patentanspruchs 10 ist vorgesehen, an den einzelnen Funktionselementen zusätzliche Montagehilfen oder Funktionsflächen anzuformen. Derartige Montagehilfen oder Funktionsflächen können beispielsweise Anker, Bewegungsachsen oder sonstige Elemente sein, die eine Befestigung bzw. Lagerung der Funktionselemente im später eingesetzten Bürstenträger ermöglichen (Anspruch 11).

Nach den Merkmalen des Patentanspruchs 12 besteht die Möglichkeit, die Funktionselemente und den Kunststoffrahmen aus verschiedenen Kunststoffmaterialien herzustellen. Dies ist insbesondere dann sinnvoll, wenn beispielsweise der nicht in einer Zahnbürste benötigte Kunststoffrahmen weggeworfen oder wiederverwendet wird und daher von niederer oder anderer Kunststoffqualität sein kann.

Nach dem Merkmal des Patentanspruchs 13 weisen die Funktionselemente an ihren zu verankernden Enden Hinterschneidungen auf, die, wenn sie gelenkig im Bürstenträger gelagert sind, ein einfaches Einsetzen in die hierfür vorgesehenen Ausnehmungen ermöglichen, so daß sie ähnlich einer Schnappverbindung einmal eingesetzt, nicht mehr aus dem Bürstenträger entfernbar aber dennoch in einer oder mehreren gewünschten Richtungen schwenkbar gelagert sind.

Weitere Ausgestaltungen und Vorteile der Erfindung werden im folgenden mit Bezug auf die beigefügten Zeichnungen beschrieben. Darin zeigen:
- Fig. 1: eine perspektivische Ansicht eines Funktionselementträgers nach der Erfindung mit Funktionselementen, die gemäß einem erfindungsgemäßen Verfahren hergestellt wurden;
- Fig. 2: eine Draufsicht auf den Funktionselementträger aus Fig. 1 nach dem Verschieben der beiden äußeren Längsstreben gegenüber der inneren Längsstrebe;
- Fig. 3: eine perspektivische Ansicht eines weiteren Funktionselementträgers nach der Erfindung mit Funktionselementen und an den äußeren Rändern nach oben verlaufenden Streben, die beim Transportieren des Funktionselementträgers die einzelnen Funktionselemente vor Beschädigung oder Abnutzung von außen her schützen sollen;
- Fig. 4: eine perspektivische Ansicht einer Ausführungsform eines Bürstenträgers mit Funktionselementen, die nach dem erfindungsgemäßen Verfahren hergestellt worden sind;
- Fig. 5: eine perspektivische Ansicht einer weiteren Ausführungsform eines Bürstenträgers mit Funktionselementen, die nach dem erfindungsgemäßen Verfahren hergestellt worden sind.

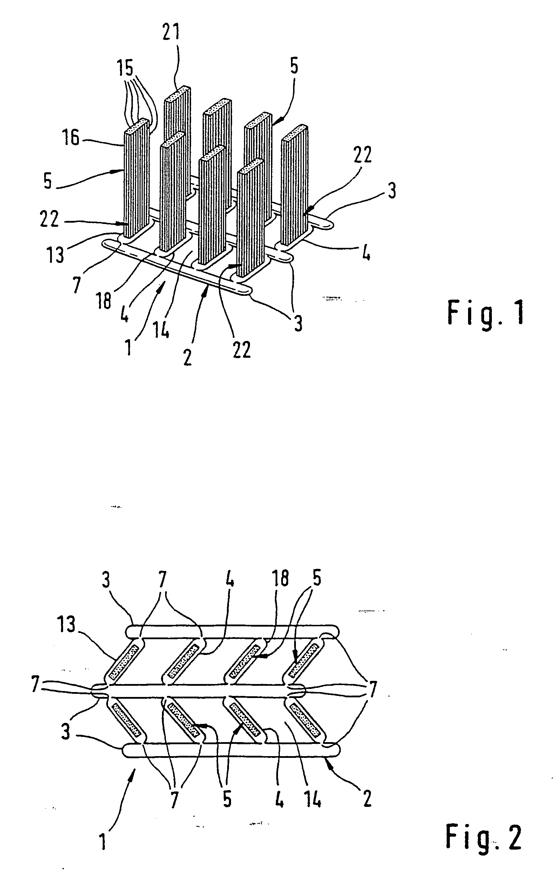

Fig. 1 zeigt eine perspektivische Ansicht eines Funktionselementträgers 1 nach der Erfindung, welcher gemäß dem erfindungsgemäßen Verfahren hergestellt worden ist. Der Funktionselementträger 1 weist dabei einen aus vorzugsweise thermoplastischem Kunststoff hergestellten gitter- oder stabförmigen Kunststoffrahmen 2 auf.

Als "thermoplastischer Kunststoff" wird im vorliegenden Fall jeder Kunststoff bezeichnet, der durch Erwärmen geschmolzen werden kann. Insbesondere werden als thermoplastischer Kunststoff Polystyrene und Polystyren-Mischpolymere, Mischpolymere aus Polyvinylchlorid und Polyvinylchloridacetat, Polyfluoride und Mischpolymere aus solchen, Polyamide, Polyimide, Polyester, Polypropylen und Polyurethane bezeichnet.

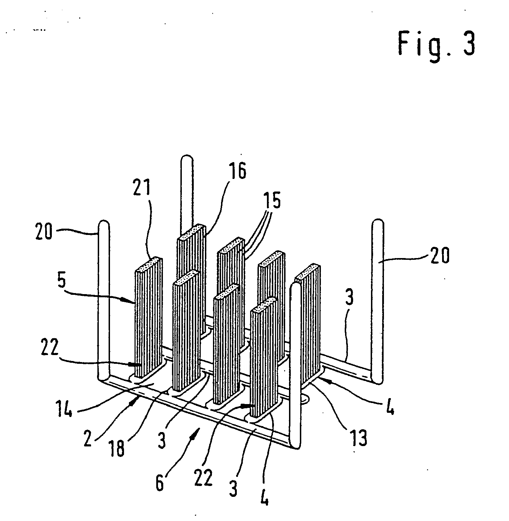

Der Kunststoffrahmen 2 besteht nach den Figuren 1 bis 3 aus Gitterstäben, die im vorliegenden Ausführungsbeispiel aus drei Längsstreben 3, die an Gitterpunkten 7 über Querstreben 4 miteinander verbunden sind, gebildet werden. Die Querstreben 4 sind dabei deutlich kürzer als die Längsstreben 3 und bilden nach Fig. 1 und 3 Rechtecke und nach Fig. 2 Parallelogramme. Sie können aber je nach der geometrischen Auslegung länger, gekrümmt oder sonstwie ausgestaltet sein. Wichtig ist nur, daß sie noch einen Verbund untereinander und mit den Funktionselementen bilden.

Die Querstreben 4 sind nach den Figuren 1 bis 3 vor den Gitterpunkten 7 mit Verjüngungen 18 versehen, so daß ein schmaler Übergang zu den Längsstreben 3 entsteht. Hierdurch werden einerseits bewegliche Gitterpunkte 7 gebildet, so daß durch Verschieben der mittleren Längsstrebe 3 gegenüber einer oder mehrerer äußerer Längsstreben 3 gemäß Fig. 2 die Funktionselemente 5 mehr oder weniger pfeilförmig im Kunststoffrahmen 2 angeordnet werden können. Andererseits lassen sich die einzelnen Funktionselemente 5 an den Verjüngungen 18 leichter abtrennen.

Die Querstreben 4 können in den Ausführungsbeispielen nach den Figuren 1 bis 3 an ihren verankerungsseitigen Enden 22 Verankerungs-, Halte- oder Achselemente 13 der sich nach oben erstreckenden Büschel 16 bilden. Die Verankerungs-, Halte- oder Achselemente 13 verlaufen fast bis zu den Längsstreben 3; sie können aber aus spritztechnischen Gründen kürzer sein, so daß sich an die Verjüngungen 18 noch Abschnitte von Querstreben (nicht dargestellt) anschließen, die dann in die Längsstreben 3 übergehen. Die Büschel 16 bestehen aus vielen einzelnen, eng beieinander liegenden Borsten 15 und bilden nach den Figuren 1 bis 3 mit den Verankerungs-, Halte- oder Achselementen 13 ein Funktionselement 5.

Da es sich bei dem Funktionselementträger 1 nach den Figuren 1 bis 3 um beispielhafte schematische Darstellungen handelt, wurde hier die Anzahl der von den Längs- und Querstreben 3,4 gebildeten Gitterfelder 14 beschränkt gehalten. Sie kann jedoch im Sinne der Erfindung beliebig groß sein. Einzelne Gitterfelder 14 können unterschiedliche Größe und Form aufweisen.

Die Borsten oder Filamente 15 bestehen gemäß den Figuren 1 bis 3 vorzugsweise aus Nylon, die in den Querstreben 4 verankert sind. Der einstückige Funktionselementträger 1 nach den Figuren 1 und 2 kann nun entweder in der gezeigten Ausführungsform auf einen Bürstenträger 8 aufgesetzt und mit diesem verbunden werden oder er kann in einem Vorbereitungsschritt in die entsprechende benötigte Form, wie dies beispielsweise Fig. 2 zeigt, gebracht und dann teilweise oder ganz umspritzt bzw. angespritzt werden, so daß ein kompletter Zahnbürstenkopf mit oder ohne Handstück entsteht. Dabei sind im wesentlichen die beiden äußeren Längsstreben 3 gegenüber der inneren Längsstrebe 3 verschoben worden. Dadurch werden die an den Gitterpunkten 7 gelenkig gelagerten Querstreben 4 ebenfalls versetzt und die Funktionselemente 5 lassen sich hierdurch in Putzrichtung keilförmig anordnen. Die Gitterfelder 14 verformen sich dabei in Parallelogramme. Insbesondere lassen sich durch dieses Verfahren komplizierte Bürstenanordnungen bzw. Anordnungen von Bürsten mit Massageelementen aus elastomeren Kunststoff oder reine Massageelemente, die ausschließlich aus elastomeren Kunststoff hergestellt sind, in einem parallelen Prozeß zum Bürstenträger herstellen und mit diesem bei einer Zusammenführung beider Prozeßlinien miteinander paaren.

In Fig. 3 ist ein Funktionselementträger 6 dargestellt, der im wesentlichen dem Funktionselementträger 1 nach Fig. 1 entspricht, allerdings mit dem Unterschied, daß hier noch an den äußeren Ecken der äußeren Längsstreben 3 senkrecht nach oben verlaufende Stützen in Form von Stäben 20 angeformt sind, die über die zahnputzseitigen Enden 21 der Büschel 16 nach oben hervorragen. Diese Stäbe 20 dienen beim Transportieren und Hantieren des Funktionselementträgers 1 zum Schutz vor Beschädigung und Verschmutzung der Borsten 15. Werden die einzelnen Funktionselemente 5 in einem Bürstenträger 8, 11 eingesetzt, so wird zuvor der komplette Kunststoffrahmen 2 mit den Stäben 20 von den Funktionselementen 5 entfernt.

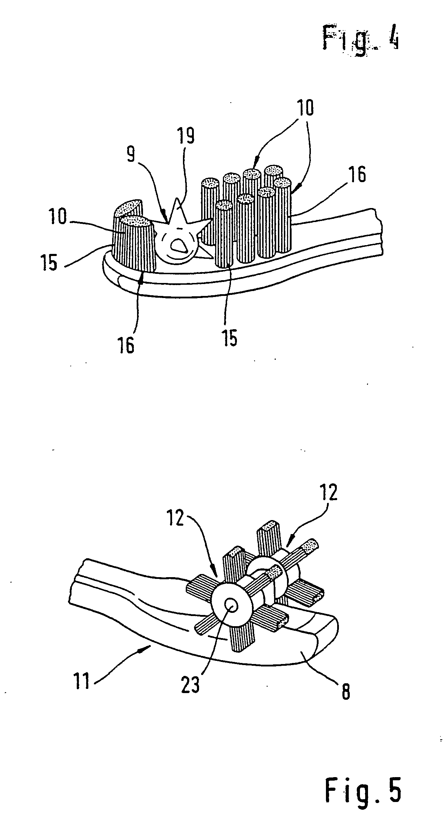

Ein Ausführungsbeispiel eines Bürstenträgers 8 mit verschiedenen Funktionselementen 9, 10 ist in Fig. 4 dargestellt. Der Bürstenträger 8 trägt dabei in seinem vorderen Bereich ein als kugelförmiges Massageelement ausgebildetes Funktionselement 9 mit konisch sich zuspitzenden Noppen 19. Das Massageelement 9 ist dabei aus elastomerem Kunststoff hergestellt und ist von der Spitze des Bürstenträgers 8 her durch einen im Querschnitt im wesentliches u-förmiges Büschel 16 als weiteres Funktionselement 10 in gewissem Maße abgeschottet. Ferner sind weitere großflächige Büschel 16 oder sonstige Massageelemente als weitere Funktionselemente 10 vorgesehen.

Ein weiteres Ausführungsbeispiel eines Bürstenträgers mit Funktionselementen 12 für Sonderfunktionen ist in Fig. 5 dargestellt. Der Bürstenträger 11 trägt dabei schaufelradförmige Funktionselemente 12, die Pflege- und Massagefunktion im Mund- und Rachenraum einer Person (nicht dargestellt) wahrnehmen sollen. Die schaufelradförmigen Funktionselemente 12 sind auf einer gemeinsamen Achse 23 drehbar gelagert.

## Patentansprüche

1. Verfahren zum Herstellen von Funktionselementen (5, 9, 10, 12), die beispielsweise aus einzelnen aus Borsten (15) zusammengesetzten Büscheln (5, 10) und/oder aus Massage- (12), Interdentalreinigungselementen (9) oder aus sonstigen auf einer Zahnbürste zu befestigenden, auch bestimmte Sonderfunktionen einnehmenden Elementen bestehen, wobei die Funktionselemente (5, 9, 10, 12) an ihren in einer Zahnbürste zu verankernden Enden (22) mit einem Verankerungs-, Halte- oder Achselement (13) versehen sind, wobei das Verfahren folgende Schritte aufweist:
Einsetzen mehrerer Funktionselemente (5, 9, 10,12) in entsprechende Ausnehmungen einer Spritzgußform, wobei die Spritzgußform durch im Werkzeug ausgebildete gitter- oder stabförmige Kanäle mit den Ausnehmungen in den Bereichen der zu befestigenden Enden (22) der Funktionselemente (5, 9, 10, 12) verbunden ist;
Ausspritzen der gitter- oder stabförmigen Kanäle und An- oder Umspritzen der zu verankernden Enden (22) der Funktionselemente (5, 9, 10, 12) mit verflüssigtem Kunststoff;
Abkühlen des Kunststoffmaterials und Entnahme eines aus einem gitter- oder stabförmigen Kunststoffrahmen (2) und aus den Funktionselementen (5, 9, 10, 12) zusammengesetzten Funktionselementträgers (1, 6), **dadurch gekennzeichnet, daß** in einem nächsten Verfahrensschritt der Funktionselementträger (1, 6) einer weiteren Fertigungsstation übergeben wird, in der die Funktionselemente (5, 9, 10, 12) vom Kunststoffrahmen (2) getrennt und anschließend die zu verankernden Enden (22) der Funktionselemente (5, 9, 10, 12) in einem Bürstenträger (8) befestigt werden, wobei der gitter- oder stabförmige Kunststoffrahmen (2) Gitterstäbe (3, 4) und Gitterpunkte (7) aufweist, zwischen denen Verjüngungen (18) ausgebildet sind.

2. Verfahren nach Anspruch 1, wobei an die Funktionselemente (5, 9, 10, 12) zusätzliche Montagehilfen oder Funktionsflächen angespritzt werden.

3. Verfahren nach Anspruch 2, wobei die Montagehilfen oder Funktionsflächen als Anker, Bewegungsachsen oder ähnliches ausgebildet sind.

4. Verfahren nach Anspruch 1, wobei die Funktionselemente (5, 9, 10, 12) und der Kunststoffrahmen (2) aus verschiedenen Kunststoffmaterialien hergestellt sind.

5. Verfahren nach Anspruch 1, wobei die Funktionselemente (5, 9, 10, 12) zu deren Befestigung am Kunststoffrahmen (2) Hinterschneidungen aufweisen.

6. Verfahren nach Anspruch 1, wobei in einem nächsten Verfahrensschritt der Funktionselementträger (1) einer weiteren Fertigungsstation übergeben wird, in der dieser in einem Bürstenträger (8) derart durch Umspritzen eingebettet wird, daß anschließend nur die zu befestigenden Enden (22) der Büschel (16) vom Bürstenträger (8) umschlossen sind.

7. Verfahren nach Anspruch 6, wobei der gitter- oder stabförmige Kunststoffrahmen (2) aus Gitterstäben (3, 4) zusammengesetzt ist, deren Übergänge Gitterpunkte (7) bilden, zwischen denen Verjüngungen (18) ausgebildet sind und wobei der Kunststoffrahmen (2) vor dessen Umspritzen durch den Bürstenträger (8) so verformt wird, daß die Funktionselemente (5) nach dem Umspritzen ihre gewünschte Position im Bürstenträger (8) einnehmen.

8. Verfahren nach Anspruch 1 oder 8, wobei verschiedene Funktionselemente (5, 9, 10, 12) aus elastomerem Kunststoff an dem Kunststoffrahmen (2) ausgebildet sind.

9. Funktionselemente (5, 9, 10, 12), die beispielsweise aus einzelnen Borsten (15) zusammengesetzten Büscheln (5, 10) und/oder aus Massage- (12) oder Interdentalreinigungselementen (9) oder aus sonstigen auf einer Zahnbürste zu befestigenden, auch bestimmte Sonderfunktionen einnehmenden Bauteilen bestehen, wobei die Funktionselemente (5, 9, 10, 12) an ihren in einer Zahnbürste zu befestigenden Enden ein Verankerungs-, Halte- oder Achselement (13) aufweisen und wobei die einzelnen Funktionselemente (5, 9, 10, 12) über ihre Verankerungs-, Halte- oder Achselemente (13) an einem gitter- oder stabförmigen Kunststoffrahmen (2) befestigt sind und so einen Funktionselementträger (1, 6) bilden, **dadurch gekennzeichnet, daß** der gitter- oder stabförmige Kunststoffrahmen (2) aus zusammenhängenden Gitterstäben (3, 4) besteht, die an ihren Übergangsstellen zu den zu verankernden Enden Gitterpunkte (7) bilden, zwischen denen Verjüngungen (18) ausgebildet sind.

10. Funktionselemente (5, 9, 10, 12) nach Anspruch 9, wobei an ihnen zusätzliche Montagehilfen oder Funktionsflächen (20) angeordnet sind.

11. Funktionselemente (5, 9, 10, 12) nach Anspruch 10, wobei die Montagehilfen oder Funktionsflächen als Anker, Bewegungsachsen oder als ähnliche Bauelemente ausgebildet sind.

12. Funktionselemente (5, 9, 10, 12) nach Anspruch 9, wobei die Funktionselemente (5, 9, 10, 12) und der Kunststoffrahmen (2) aus verschiedenen Kunststoffmaterialien bestehen.

13. Funktionselemente (5, 9, 10, 12) nach Anspruch 9, wobei die Funktionselemente (5, 9, 10, 12) zu deren Befestigung am Kunststoffrahmen (2) an ihren zu verankernden Enden Hinterschneidungen aufweisen.

## Claims

1. A method for manufacturing function elements (5, 9, 10, 12) consisting, for example, of individual clusters (5, 10) comprising bristles (15) and/or consisting of massage elements (12), interdental cleaning elements (9) or other elements that assume the function of fastening to a toothbrush or even certain special functions, such that the function elements (5, 9, 10, 12) are provided with an anchoring, holding or axial element (13) on their ends (22), anchoring them in a toothbrush, such that the method consists of the following steps: inserting multiple function elements (5, 9, 10, 12) into corresponding recesses in an injection mold, such that the injection mold is connected by grid-shaped or rod-shaped channels, designed in the mold, to the recesses in the areas of the ends (22) of the function elements (5, 9, 10, 12) that are to be secured;
injecting liquefied plastic into the grid-shaped or rod-shaped channels and sheathing the ends (22) of the function elements (5, 9, 10, 11) to be anchored with liquefied plastic;
cooling the plastic material and removing a function element carrier (1, 6) comprising a grid-shaped or rod-shaped plastic frame (2) and the function elements (5, 9, 10, 12),
**characterized in that**
in the next method step, the function element carrier (1, 6) is transferred to another finishing station, where the function elements (5, 9, 10, 12) are separated from the plastic frame (2) and are then attached to the anchoring ends (22) of the function elements (5, 9, 10, 12) in a brush carrier (8), such that the grid-shaped or rod-shaped plastic frame (2) has grid rods (3, 4) and grid points (7) between which tapered areas (18) are formed.

2. The method according to claim 1, wherein additional mounting aids or function surfaces are integrally molded on the function elements (5, 9, 10, 12).

3. The method according to claim 2, wherein the mounting aids or function surfaces are designed as anchors, motion axes or the like.

4. The method according to claim 1, wherein the function elements (5, 9, 10, 12) and the plastic frame (2) are manufactured from different plastic materials.

5. The method according to claim 1, wherein the function elements (5, 9, 10, 12) have undercuts for fastening them to the plastic frame (2).

6. The method according to claim 1, wherein in the next method step, the function element carrier (1) is transferred to another manufacturing station, where it is embedded in a brush carrier (8) by sheathing, such that only the ends (22) of the cluster (16) that are to be attached are surrounded by the brush carrier (8) subsequently.

7. The method according to claim 6, wherein the grid-shaped or rod-shaped plastic frame (2) comprises grid rods (3, 4) whose transitions form grid points (7) between which tapered areas (18) are formed and whereby the plastic frame (2) is deformed by the bristle carrier (8) before being sheathed, such that the function elements (5) assume their desired position in the brush carrier (8) after sheathing.

8. The method according to claim 1 or 8, wherein various function elements (5, 9, 10, 12) are formed from elastomeric plastic on the plastic frame (2).

9. The function elements (5, 9, 10, 12), consisting for example, of clusters (5, 10) comprising individual bristles (15) and/or massage elements (12) or interdental cleaning elements (9) or other components that are to be attached to a toothbrush and assume certain special functions, whereby the function elements (5, 9, 10, 12) have an anchoring, holding or axial element (13) on their ends to be attached to a toothbrush, and whereby the individual function elements (5, 9, 10, 12) are attached to a grid-shaped or rod-shaped plastic frame (2) over their anchoring, holding or axial elements (13) and thus form a function element carrier (1, 6),
**characterized in that**
the grid-shaped or rod-shaped plastic frame (2) consists of grid rods (3, 4) joined coherently, forming grid points (7) at their transition sites to the anchoring ends, tapered areas (18) being formed between said grid points.

10. The function elements (5, 9, 10, 12) according to claim 9, wherein additional mounting aids or function surfaces (20) are arranged on them.

11. The function elements (5, 9, 10, 12) according to claim 10, wherein the mounting aids or function surfaces are formed as anchors, movement axes or as similar components.

12. The function elements (5, 9, 10, 12) according to claim 9, wherein the function elements (5, 9, 10, 12) and the plastic frame (2) consist of different plastic materials.

13. The function elements (5, 9, 10, 12) according to claim 9, wherein on their ends to be anchored, the function elements (5, 9, 10, 12) have undercuts for fastening them to the plastic frame (2).

## Revendications

1. Procédé de fabrication d'éléments fonctionnels (5,9,10,12), qui sont par exemple constitués d'aigrettes (5,10) composées de soies (15) et/ou constitués d'éléments de massage (12), de nettoyage interdentaire (9) ou d'autres éléments à fixer sur une brosse à dents, remplissant aussi des fonctions particulières, moyennant quoi les éléments fonctionnels (5,9,10,12) sont pourvus sur leurs extrémités (22) à ancrer dans une brosse à dents d'un élément d'ancrage, de retenue ou d'axe (13), moyennant quoi le procédé présente les étapes suivantes :
placement de plusieurs éléments fonctionnels (5,9,10,12) dans des évidements correspondants d'un moule coulé par injection, moyennant quoi le moule coulé par injection est relié par des canaux en forme de grille ou de barre réalisés dans l'outil avec les évidements dans les zones des extrémités (22) à fixer des éléments fonctionnels ;
moulage par injection des canaux en forme de grille ou de barre et moulage par injection sur ou enrobage par injection des extrémités (22) à ancrer des éléments fonctionnels (5,9,10,12) avec du plastique liquéfié ;
refroidissement du matériau plastique et retrait d'un support d'élément fonctionnel (1,6) composé d'un cadre de plastique (2) en forme de grille ou de barre et des éléments fonctionnels (5,9,10,12), **caractérisé en ce que** dans une étape de procédé suivante le support d'éléments fonctionnels (1,6) est transmis à un poste de finition supplémentaire, dans lequel les éléments fonctionnels (5,9,10,12) sont séparés du cadre de plastique (2) et ensuite les extrémités (22) à ancrer des éléments fonctionnels (5,9,10,12) sont fixées dans un support de brosse (8), moyennant quoi le cadre de plastique (2) en forme de grille ou de barre présente des barres de grille (3,4) et des points de grille (7), entre lesquels des rétrécissements (18) sont réalisés.

2. Procédé selon la revendication 1, dans lequel sur les éléments fonctionnels (5,9,10,12), des auxiliaires de montage supplémentaires ou des surfaces fonctionnelles sont moulés par injection.

3. Procédé selon la revendication 2, dans lequel les auxiliaires de montage ou les surfaces fonctionnelles sont configurés comme des ancres, des axes de mouvement ou similaire.

4. Procédé selon la revendication 1, dans lequel les éléments fonctionnels (5,9,10,12) et le cadre de plastique (2) sont fabriqués à partir de différentes matières plastiques.

5. Procédé selon la revendication 1, dans lequel les éléments fonctionnels (5,9,10,12) présentent des découpes arrières en vue de leur fixation au cadre de plastique (2).

6. Procédé selon la revendication 1, dans lequel dans une étape de procédé suivante, le support d'éléments fonctionnels (1) est transmis à un poste de finition supplémentaire, dans lequel celui-ci est incorporé dans un support de brosse (8) par enrobage par injection de telle sorte, que ensuite seules les extrémités à fixer (22) de l'aigrette (16) soient enveloppées par le support de brosse (8).

7. Procédé selon la revendication 6, dans lequel le cadre de plastique (2) en forme de grille ou de barre est composé de barres de grille (3,4), dont les transitions forment des points de grille (7), entre lesquels des rétrécissements (18) sont réalisés et moyennant quoi le cadre de plastique (2) est déformé avant l'enrobage par injection de celui-ci par le support de brosse (8), de telle sorte que les éléments fonctionnels (5) adoptent après l'enrobage par injection leur position souhaitée sur le support de brosse (8).

8. Procédé selon la revendication 1 ou 8, dans lequel différents éléments fonctionnels (5,9,10,12) en plastique élastomère sont réalisés sur le cadre de plastique (2).

9. Eléments fonctionnels (5,9,10,12), qui sont par exemple constitués d'aigrettes (5,10) composées de soies (15) individuelles et/ou d'éléments de massage (12) ou de nettoyage interdentaire (9) ou d'autres composants à fixer sur une brosse à dents, remplissant aussi des fonctions particulières, moyennant quoi les éléments fonctionnels (5,9,10,12) présentent sur leurs extrémités à fixer dans une brosse à dents un élément d'ancrage, de retenue ou d'axe (13) et moyennant quoi les éléments fonctionnels (5,9,10,12) individuels sont fixés par l'intermédiaire de leurs éléments d'ancrage, de retenue ou d'axe (13) sur un cadre de plastique (2) en forme de grille ou de barre et forment ainsi un support d'éléments fonctionnels (1,6), **caractérisés en ce que** le cadre de plastique (2) en forme de grille ou de barre est constitué de barres de grille (3,4) solidarisées, qui forment à leurs emplacements de transition par rapport aux extrémités à ancrer des points de grille (7), entre lesquels des rétrécissements (18) sont réalisés.

10. Eléments fonctionnels (5,9,10,12) selon la revendication 9, dans lesquels des auxiliaires de montage ou des surfaces fonctionnelles (20) sont disposés sur ceux-ci.

11. Eléments fonctionnels (5,9,10,12) selon la revendication 10, dans lesquels les auxiliaires de montage ou les surfaces fonctionnelles sont configurés comme des ancres, des axes de mouvement ou comme des composants similaires.

12. Eléments fonctionnels (5,9,10,12) selon la revendications 9, dans lesquels les éléments fonctionnels (5,9,10,12) et le cadre de plastique (2) sont constitués de différentes matières plastiques.

13. Eléments fonctionnels (5,9,10,12) selon la revendication 9, dans lesquels les éléments fonctionnels (5,9,10,12) présentent en vue de leur fixation sur le cadre de plastique (2) des découpes arrières sur leurs extrémités à ancrer.
